# EUROPEAN PATENT APPLICATION

(11) **EP 0 952 658 A2**
(43) Date of publication of application: **27.10.1999**
(21) Application number: 99107629.0
(22) Date of filing: 16.04.1999
(51) Int. Cl.: H02K 21/16

(54) **Electric motor of the electronic commutation type**

(30) Priority: 23.04.1998 IT TO980343
(71) Applicant: BITRON S.p.A., 10064 Pinerolo (Torino) (IT)
(72) Inventor: De Filippis, Pietro, 20052 Monza (MI) (IT); Casati, Sergio, 22050 Rovagnate (CO) (IT); Navarra, Pietro, 20093 Cologno Monzese (MI) (IT); Fasola, Giancarlo, 20124 Milano (MI) (IT)
(74) Representative: Lotti, Giorgio

(57) **Abstract**

Electric motor (1) of the electronic commutation type having a number of radial teeth (11) and an assembly element (12) realised of electrically insulated material and co-molded with the radial teeth (11) themselves, an electronic (3) device for supplying and controlling the motor (1) itself, and a rotor (4) provided with a driving shaft (6) and with a permanent magnet (10) realised by extrusion in a single piece and co-molded with the driving shaft (6).

## Description

The present invention refers to an electric motor of the electronic commutation type.

In particular, the present invention will make reference, without losing any of its generality, to an electric motor of the commutation type which may be assembled to advantage to a petrol fuel pump, and which comprises a stator, a rotor coupled to said stator itself in such a way that said rotor may revolve around an axis of rotation, and an electronic device for supplying and controlling the said electric motor itself.

Generally, in electric motors of the type described above, the rotor comprises a driving shaft and a number of permanent magnets mounted on the driving shaft itself, while the stator comprises a number of teeth uniformly distributed around the axis of rotation, and an external frame, which contains and assembles the teeth, and defines with said teeth themselves respective hollows which are axially open and suitable for housing respective stator windings.

Electric motors of the kind described above have some drawbacks in both structural and economic terms. From the structural point of view, the fact that there are a number of permanent magnets mounted on the driving shaft and the high rotation speed of the driving shaft itself mean that peripheral elements are necessary, for assembling and containing the magnets themselves, suitable for opposing centrifugal forces, while the shape of the hollows means that winding must be carried out by means of winding devices, which, despite the advances which have taken place in recent years, still result in low productive speeds and low filling capacity. It is obvious that each of the drawbacks described above has direct negative repercussions in terms of the production cost of each electric motor itself, with the end result that the realisation of high volume of production is extremely onerous.

The aim of the present invention is to realise an electric motor of the electronic commutation type, which, other than presenting a high reliability co-efficient, will permit that the drawbacks described above be overcome in a simple and cost-effective manner.

An electric motor of the electronic commutation type will be realised according to the present invention comprising a stator which in turn comprises a number of radial teeth, a rotor coupled to said stator itself in such a way that said rotor may revolve around an axis of rotation, and an electronic device for supplying and controlling the motor itself, the motor being characterised by the fact that the stator further comprises an assembly element of the radial teeth, realised in electrically insulated material and by co-molding of the radial teeth themselves; said rotor comprising a permanent magnet realised in a single piece.

The invention will now be described with reference to the attached drawings, which illustrate an example of a non-limiting realisation of the invention, in which:
- FIG. 1: illustrates, in axial section, a preferred form of realisation of the electric motor according to the present invention;
- FIG. 2: is a transverse view of the electric motor shown in FIG. 1;
- FIG. 3: illustrates, on an enlarged scale, a section along the line III-III shown in FIG. 2;
- FIGS 4 and 5: show two transverse views, with some parts in section and some parts removed for the purpose of clarity, of the motor shown in FIG. 1;
- FIGS. 6, 7, 8 and 9: are perspective views of the respective assembly stages of the motor shown in FIG. 1;
- FIGS. 10, 11 and 12: illustrate respective development plans of respective particulars of the motor shown in FIG. 1;
- FIGS. 13 and 14: illustrate, on an enlarged scale, a particular of the motor shown in FIG. 1 in two different stages of production; and
- FIGS. 15 and 16: are schematic views of an electronic particular and, respectively, of an electric particular of the motor shown in FIG. 1.

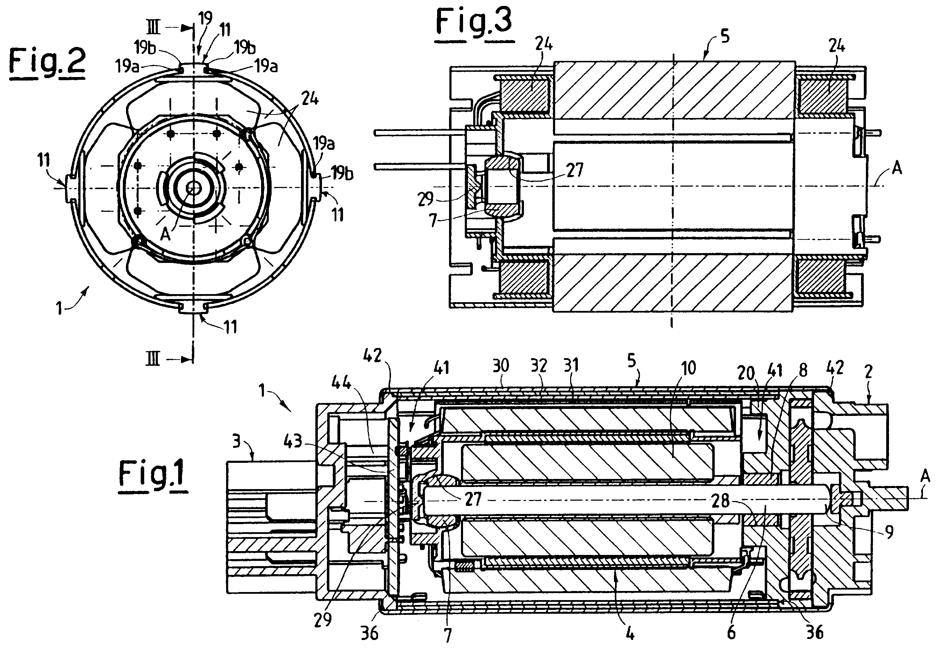

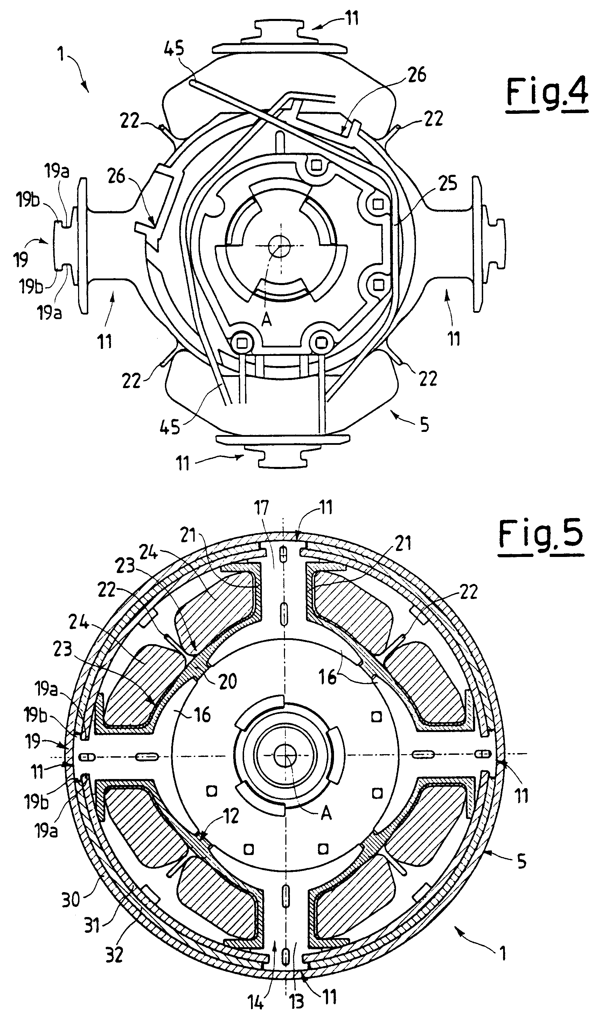

With reference initially to FIG. 1, FIGS. 1-5, 1 indicates an electric motor with a biphase unipolar structure in its entirety, said motor being suitable to be assembled with a fuel pump 2 mounted in succession to the motor 1 itself along an A axis of rotation of the motor 1.

The motor 1 comprises an electronic device 3 for supplying and controlling, a rotor 4 which may revolve around the A axis arranged along the A axis itself in an intermediate position between the device 3 and the pump 2, and a stator 5, which supports, in such a way that it may revolve and in its own interior, the rotor 4, and constrains axially between them the pump 2 and the motor 1 themselves.

The rotor 4 comprises a driving shaft 6, which is connected to the stator 5 in such a way that it may revolve in correspondence to the respective opposite extremities by means of the interposition of two bushings 7 and 8, and presents, from the part of the bushing 8, an end portion 9 angularly coupled to the pump 2. The rotor 4 further comprises a cylindrical magnet 10, which is realised by extrusion in a single piece and is comprised of anisotropic ferrite, and presents diametric magnetisation at two poles. In particular, the magnet 10 is splined to the driving shaft 6 in a position which is substantially intermediate between the two bushings 7 and 8, and is co-molded to the driving shaft 6 itself in such a way as to render the rotor 4 itself intrinsically balanced, and being realised as previously described in a single piece. The magnet 10 is completely lacking in any kind of peripheral element for assembly or containment whatsoever.

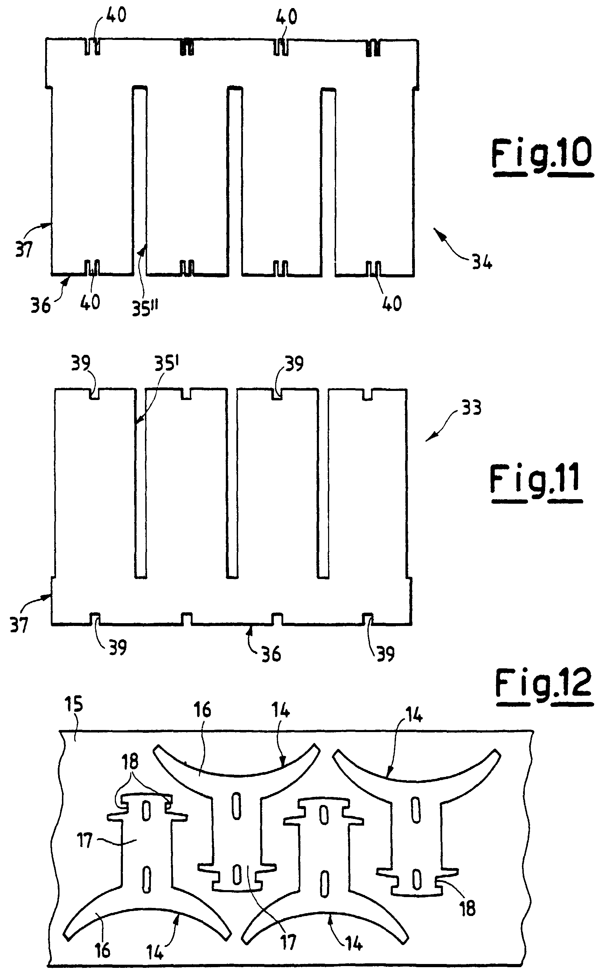

The stator 5 comprises four stator teeth 11, or stator pole shoes, uniformly distributed around the A axis, and an element 12 for assembling and covering the teeth 11 themselves which is realised in electrically insulating plastic material and by co-molding of the teeth 11 themselves. Each tooth 11 is defined by a respective stack 13 of shaped metallic laminations 14, each of which, as is better illustrated in FIG. 12, is obtained from a tape 15, is of a shape substantially in the form of a T, and comprises a respective portion 16 with a curved base, and a respective head portion 17 which is transverse to the relative portion 16 itself, and is provided at one end with respective lateral notches 18 with a substantially rectangular section. The laminations 14 of each tape 15 are obtained in counterpoised positions in relation to each other in such a way as to alternate, on each edge of the tape 15 itself, a base portion 16 and a top/head portion 17 reducing wastage in the tape 15 to a minimum, while the laminations 14 of each tooth 11 are pre-assembled in relation to each other by means of "stitching" after they have been arranged side by side and in contact one with the other, and the relative notches 18 define a respective guiding device 19 comprising two housings 19a and two longitudinal projecting parts 19b parallel to each other and to the A axis, and from which the housing 19a presents a determined depth P with regard to the projecting parts 19b.

The element 12 comprises a cylinder 20 coaxial to the A axis, inside of which are buried all the base portions 16 of the laminations 14, and further comprising, for each tooth 11, a pair of radial walls 21 arranged in contact with the head portion 17 of the laminations 14 of the relative stack 13, and a further radial wall 22, which extends transversely from the cylinder 20 and is arranged in a substantially intermediate position between two walls 21. Each wall 22 defines, together with the cylinder 20 and the two adjacent walls 21, two hollows 23 electrically insulated one from the other by the wall 22 itself, and radially open towards the exterior of the rotor 4. The hollows 23 are occupied by respective spool windings 24, which make up part of the stator 5, and are realised before completing the assembly of the motor 1 by means of a spool winder (of a well-known type, which is not illustrated) presenting a high level of winding speed and a high filling co-efficient.

The cylinder 20 comprises, on the part turned towards the device 3, a wire guide edge 25 extending around the A axis and suitable for co-operating with the wires of the windings 24, two housings 26 obtained along the edge 25 itself, and two seats 27 and 28 occupied by the bushings 7 and 8 respectively: the seat 28 and the bushing 8 are coaxial to the A axis and are internally and, respectively, externally cylindrical to permit an axial movement of the bushing 8 itself, while the seat 27 and the bushing 7 are internally and, respectively, externally spherical not only to permit the rotation of the bushing 7, but also to permit the assembly of the said bushing 7. The seat 28 further presents an external appendix 29 arranged transversely to the A axis, and suitable for acting on the driving shaft 6 to limit the axial play of the driving shaft 6 itself.

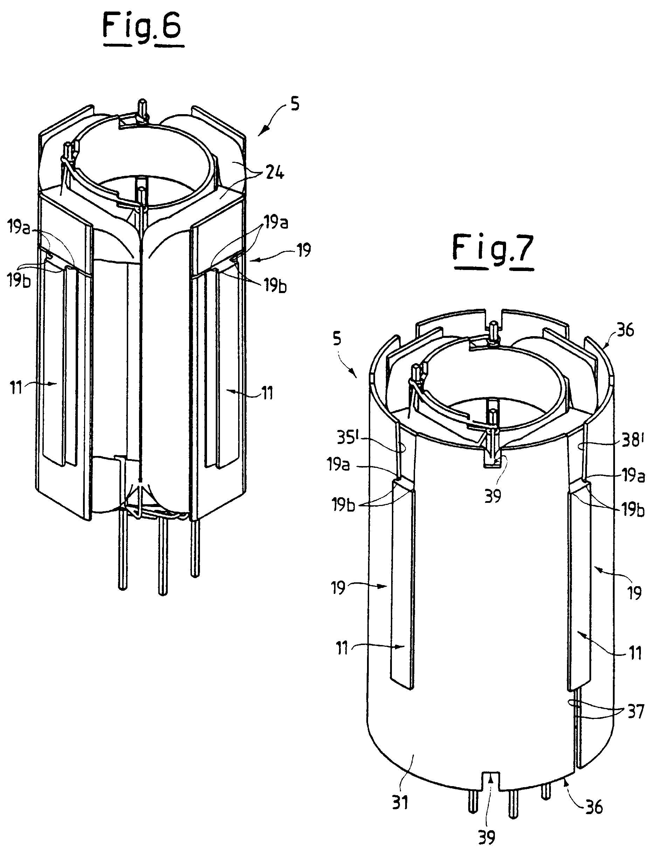

According to the illustration shown in FIGS. 6-11, the stator 5 further comprises a continuous tubular frame 30 arranged around the teeth 11 and an element 12, and two discontinuous tubular liners 31 and 32, which are coaxially mounted in relation to each other one behind the other and between the frame 30 and the hollow 23 to radially close the hollow 23 itself towards the exterior, said liners 31 and 32 are obtained from respective tapes 33 and 34 which are of a determined thickness.

In particular, the tape 33, 34 presents three slots 35', 35" longitudinally closed and obtained by partially notching the tape 33, 34 itself, two transverse edges 36 of the same length, and two edges 37, which, once they are alongside each other, define a further slot, 38', 38'', which is open longitudinally, in relation to each other: the slots 35' and 38' of the liner 31 are in juxtaposition to the slots 35'' and 38'' of the liner 32 and are narrower than the width presented by the slots 35'' and 38'', which, in turn, are of a width equal to a width of the head portions 17 of the laminations 14 in correspondence to the projecting parts 19b.

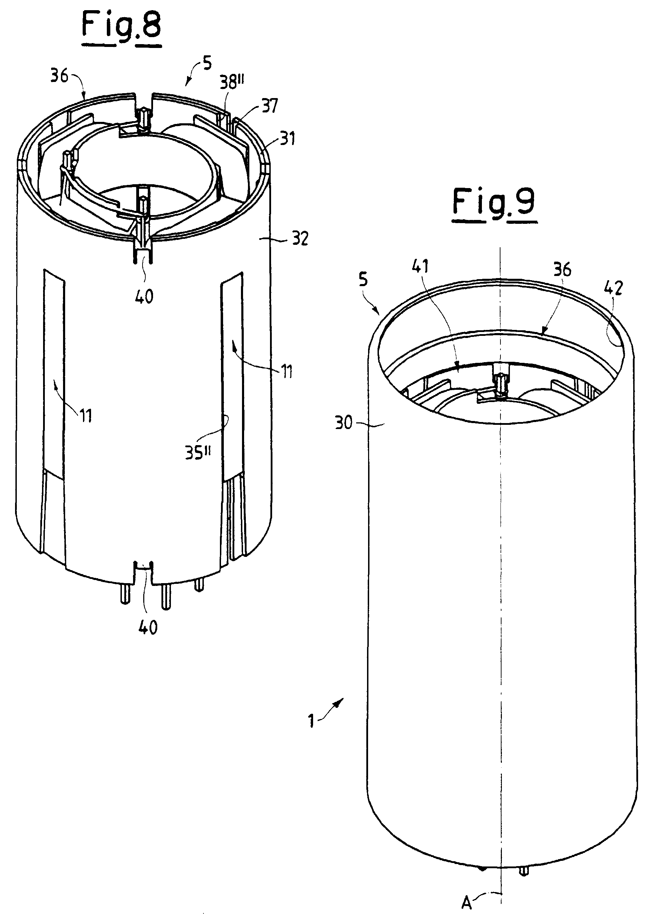

The tape 33 further presents, for each edge 36, four notches 39 which are obtained along the edge 36 itself, and the relative liner 31 is an internal liner arranged directly facing the hollows 23; while the tape 34 presents, for each edge 36, four hooks 40 which are obtained along the edge 36 itself, and the relative liner 32 is an external liner arranged between the liner 31 and the frame 30. Once the windings 34 are realised inside the hollows 23 (FIG. 6), and once the tapes 33 and 34 are curved in such a way as to obtain the liners 31 and 32, the latter are mounted in succession one on top of the other by initially inserting the borders of the slots 35' and 38' (FIG. 7) inside the housings 19a with an axial movement of the liner 31 in a determined direction of insertion, and by successively inserting the projecting parts 19b inside the slots 35'' and 38'' (FIG. 8) with an axial movement of the liner 32 in a direction of insertion opposite to that of the liner 31: in this way, the openings of the slots 35' and 38' are out of phase with regard to the openings of the slots 35'' and 38''. Furthermore, the depth P of the housings 19a is such that it permits the realisation of the liners 31 and 32 starting from the cut down size of the tape 33 and 34 presenting in the respective development plan the same length, or presenting, as previously described, the edges 36 of an equal length in relation to each other: in fact, the depth P is such as to compensate for the different circumferential development of the liners 31 and 32 due to the assembly of the liners 31 and 32 themselves one on top of the other and on different respective diameters.

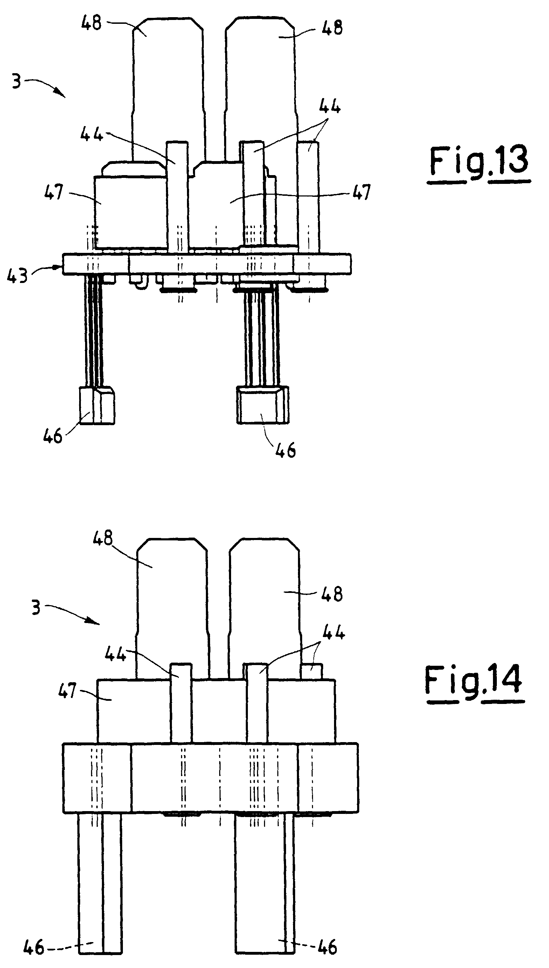

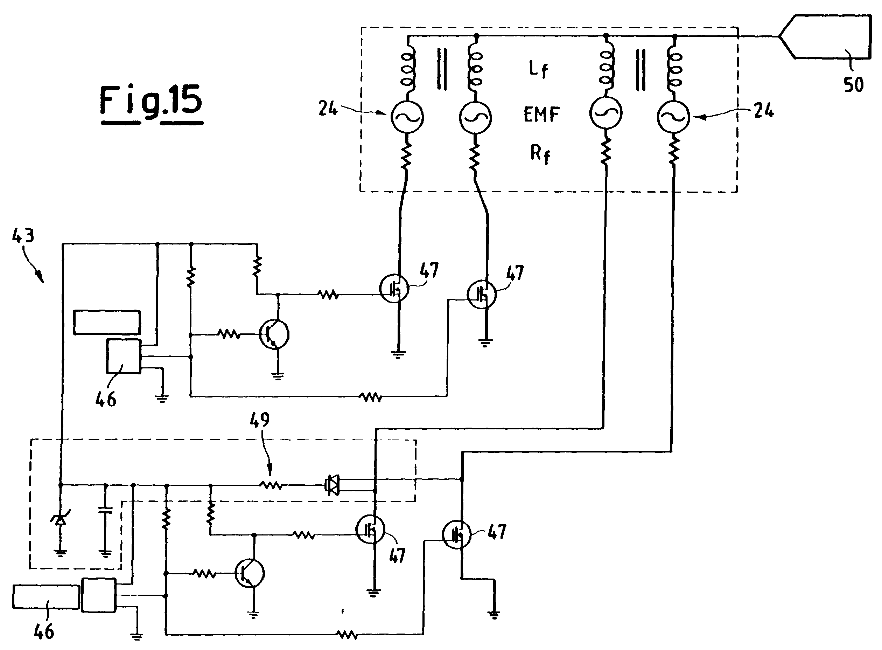

The liners 31 and 32, once they have been placed one on top of the other and on the body of the motor 1, are inserted into the frame 30, which acts with the liners 31 and 32 themselves to close the magnetic flow and, as it has an axial length greater than the axial length of the liners 31 and 32, defines two seats 41 which are internally limited by the edges 36. At this point, the electronic device 3 and the pump 2 are mounted inside the seats 41 so that they abut against the edges 36, and are then fixed in their respective positions by a circular clinch of the corresponding end edges 42 of the frame 30.According to the illustration shown in FIG. 13, the electronic device 3 comprises an electronic card 43 arranged to abut against the edges 36 of the liners 31 and 32, four passing tubes 44 mounted through the electronic card 43 itself and internally restricted by the terminals 45 of the windings 24, two Hall sensors 46 arranged inside the housings 26 four MOSFET circuits mounted on the electronic card 43 opposite the sensors 46 with relation to the electronic card 43 itself, and a pair of external FASTOM connectors 48 which are welded to the electronic card 43 in the same place as the circuits 47. According to the illustration shown in FIG. 15, the device 3 also comprises a resistor 49 mounted on each control circuit of the circuits 47, and suitable for prolonging the commutation time.

In FIG. 13 the device 3 is illustrated in its basic configuration, while in FIG. 14 the device 3 is illustrated in its final co-molded configuration, that is with all the relative components immersed in insulating material to protect the device 3 itself from suffering any damage from the surrounding environment, when in use, that might impair its functioning properly. Instead, the terminals 45 of the windings 24 are anchored to the assembly element 12 and, after being inserted inside the relative tubes 44, they are connected to the tubes 44 themselves by crimping and electric welding without welding the material.

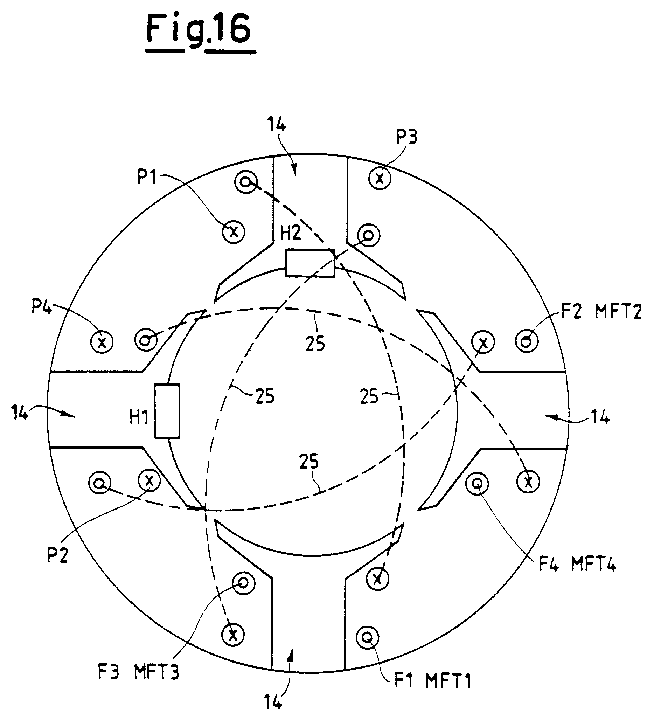

FIGS. 15 and 16 illustrate the plan of the windings in an anti-clockwise direction of rotation on the side of the electronic device 3 and, according to the illustration shown in these diagrams, the electronic card 43 is indirectly supplied by a battery 50 connected to the windings 24 coupled two by two in phase in relation to each other, that is the electronic card 43 is supplied via the windings 24 themselves which means that a filter is obtained at zero cost to render the electronic device 3 immune from any disturbances and that the need for electrolytic levelling condensers, which is a typical feature of this kind of electronic device, is eliminated. Finally, in the case of low supply voltage, when the motor 1 is functioning, the electric motor forces maintain supply at a level higher than that of the battery.

## Claims

1. Electric motor (1) of the electronic commutation type comprising a stator (5) which in turn comprises a number of radial teeth (11), a rotor (4) coupled to the stator (5) itself in such a way that said rotor may revolve around an axis (A) of rotation, and an electronic (3) device for supplying and controlling the motor (1) itself, the motor (1) being characterised by the fact that the stator (5) further comprises an assembly element (12) of the radial teeth (11), realised in electrically insulated material and by co-molding of the radial teeth (11) themselves; said rotor (4) comprising a permanent magnet (10) realised in a single piece.

2. Motor according to Claim 1, characterised by the fact that said magnet (10) is realised by means of extrusion.

3. Motor according to Claim 1 or 2, characterised by the fact that said rotor (4) also comprises a driving shaft (6) to support the said magnet (10); the driving shaft (6) and the rotor (4) being angularly coupled in relation to each other, and being rendered integral in relation to each other by means of co-molding.

4. Motor according to Claim 2, 3 or 4, characterised by the fact that said assembly element (12) comprises a number of radial walls (21, 22) defining between them respective hollows (230 radially open towards the exterior.

5. Motor according to Claim 4, characterised by the fact that said radial walls (21, 22) comprise first radial walls (21) arranged in contact with said teeth (11), and second radial walls (22) arranged in respective intermediate positions between two first adjacent lateral walls (21) to define said hollows (23).

6. Motor according to Claim 5, characterised by the fact that said teeth (11) each comprise a number of shaped plates (14) arranged transversely to said axis (A) of rotation, and alongside each other along the axis (A) of rotation itself.

7. Motor according to Claim 6, characterised by the fact that said laminations (14) are obtained from a respective tape (15), and are pre-assembled in relation to each other by means of stitching.

8. Motor according to any of the preceding Claims from 4 to 7, characterized by the fact that said stator (5) comprises closing means (30, 31, 32) common to all the said hollows (23) to radially close the hollows (23) themselves; the closing means (30, 31, 32) comprise two intermediate walls (31, 32) mounted coaxially in relation to each other and to said axis (A) of rotation, and an external cylindrical wall (30) mounted on the exterior of the intermediate walls (31, 32) themselves.

9. Motor according to Claim 8, characterised by the fact that the teeth (11) comprise guiding and positioning means (19) for guiding and positioning said intermediate walls (31, 32); the said intermediate walls (31, 32) present, for each tooth (11), respective slots (35', 38') (35'', 38'') engaged by said guiding and positioning means (19).

10. Motor according to Claim 9, characterised by the fact that the slots (35', 38') of a first intermediate wall (31) of the said two intermediate walls (31, 32) are longitudinally juxtaposed to the slots (35'', 38'') of a second intermediate wall (32) of the said two intermediate walls (31, 32).

11. Motor according to Claim 10, characterised by the fact that said two intermediate walls (31, 32) comprise hooking means (39, 40) to hook between them the intermediate walls (31, 32) themselves.

12. Motor according to Claim 11, characterised by the fact that the said two intermediate walls (31, 32) are obtained from respective further tapes (33, 34) of a determined thickness.

13. Motor according to Claim 12, characterised by the fact that the said two intermediate walls (31, 32) present respective development planes of length which are equal in relation to each other.

14. Motor according to any of the preceding Claims from 8 to 13, characterised by the fact that the said external cylindrical wall (30) is a continuous tubular wall.

15. Motor according to any of the preceding Claims, characterised by the fact that the said electronic device 3 for supplying and controlling comprises an electronic card (43), and a number of internal and external connectors (44, 48); the internal connectors (44) are co-molded together with the electronic card (43), being defined by respective tubular elements welded to the electronic card (43), and being mounted passing through the electronic card (43) itself.

16. Motor according to Claim 14, characterised by the fact that it comprises a number of stator windings (24) connected to a supply battery (50), the windings (24) being coupled two by two in phase in relation to each other; the said electronic device (3) being directly connected to the windings (24) and being supplied by said battery (50) by means of the windings (24) themselves.

17. Motor according to any of the preceding Claims, characterised by the fact of being assembled to a fuel pump (2) coupled to said driving shaft (6).

18. Electric motor of the electronic commutation type, substantially as described with reference to the attached drawings.
